# EUROPEAN PATENT APPLICATION

(11) **EP 4 465 311 A1**
(43) Date of publication of application: **20.11.2024**
(21) Application number: 24170926.0
(22) Date of filing: 18.04.2024
(51) Int. Cl.: H01F 1/01

(54) **REGENERATOR MATERIAL FOR CRYOCOOLER, REGENERATOR FOR CRYOCOOLER, AND CRYOCOOLER**

(30) Priority: 18.05.2023 JP 2023082576
(71) Applicant: Sumitomo Heavy Industries, Ltd., Tokyo 141-6025 (JP)
(72) Inventor: XU, Mingyao, Tokyo, 188-8585, (JP); LIN, Xiaogang, Tokyo, 188-8585, (JP)
(74) Representative: Louis Pöhlau Lohrentz

(57) **Abstract**

Provided are a regenerator material for a cryocooler (10) with improved toughness, and a regenerator for a cryocooler (10) and a cryocooler (10) using the same. A regenerator material for a cryocooler (10), for example, a high-temperature side regenerator material (28a) includes bismuth as a main component and at most 10% by weight of silver as an additive. In addition, a regenerator for the cryocooler (10), for example, a second regenerator (28) includes a bismuth silver-based regenerator material containing bismuth as a main component and at most 10% by weight of silver as an additive, and a magnetic regenerator material disposed at a location different from a location of the bismuth silver-based regenerator material in an axial direction of the regenerator.

## Description

### BACKGROUND OF THE INVENTION

### Field of the Invention

The present invention relates to a regenerator material for a cryocooler, and a regenerator for a cryocooler and a cryocooler using the same.

### Description of Related Art

In the related art, spherical lead has been used as a regenerator material for a cryocooler. Because lead has a higher specific heat than other materials in a low temperature region of about 50K or less and is inexpensive, it has been widely used in the past. However, at present, the use of lead is regulated or prohibited in consideration of adverse effects on the environment and the human body. It is known to use pure bismuth formed into granules as a regenerator material instead of lead (for example, Japanese Unexamined Patent Publication No. 2011-137632).

### SUMMARY OF THE INVENTION

Since pure bismuth is brittle, it may break into powder when it is filled in a regenerator during the manufacturing process of a cryocooler. In addition, during the operation of the cryocooler, there is a risk that the regenerator material of pure bismuth may break due to the force applied to the regenerator material from the working gas (for example, helium gas) flowing through the voids between the regenerator materials.

An exemplary object of an aspect of the present invention is to provide a regenerator material for a cryocooler with improved toughness, and a regenerator for a cryocooler and a cryocooler using the same.

According to an aspect of the present invention, a regenerator material for a cryocooler includes bismuth as a main component and at most 10% by weight of silver as an additive.

According to an aspect of the present invention, a regenerator for a cryocooler includes a bismuth silver-based regenerator material containing bismuth as a main component and at most 10% by weight of silver as an additive, and a magnetic regenerator material disposed at a location different from a location of the bismuth silver-based regenerator material in an axial direction of the regenerator.

According to an aspect of the present invention, a cryocooler includes the regenerator for a cryocooler according to the above-described aspect.

According to the present invention, it is possible to provide a regenerator material for a cryocooler with improved toughness, and a regenerator for a cryocooler and a cryocooler using the same.

### BRIEF DESCRIPTION OF THE DRAWINGS

Fig. 1 is a view schematically illustrating a cryocooler according to an embodiment.
Fig. 2 is a view schematically showing the cryocooler according to the embodiment.
Fig. 3 is a graph showing specific heat by volume of some metallic materials in relation to the embodiment.
Fig. 4 is a schematic view showing an axial temperature profile for a second regenerator of a cryocooler, according to an embodiment.
Fig. 5 is a graph showing a relationship between a silver content in a bismuth silver-based regenerator material and a cooling temperature of a first-stage of the cryocooler, according to the embodiment.
Fig. 6 is a graph showing a relationship between a silver content in a bismuth silver-based regenerator material and a cooling temperature of a second-stage of the cryocooler, according to an embodiment.
Fig. 7 is a schematic view showing a second regenerator of the cryocooler according to a modification example.

### DETAILED DESCRIPTION OF THE INVENTION

Hereinafter, an embodiment for carrying out the present invention will be described in detail with reference to the drawings. In the description and the drawings, the same or equivalent components, members, and processes will be represented by the same reference numerals, and overlapping description will be omitted as appropriate. The scale or shape of each part that is shown in the drawings is conveniently set for ease of description and is not limitedly interpreted unless otherwise specified. The embodiments are exemplary and do not limit the scope of the present invention in any way. All features or combinations thereof described in the embodiments are not necessarily essential to the invention.

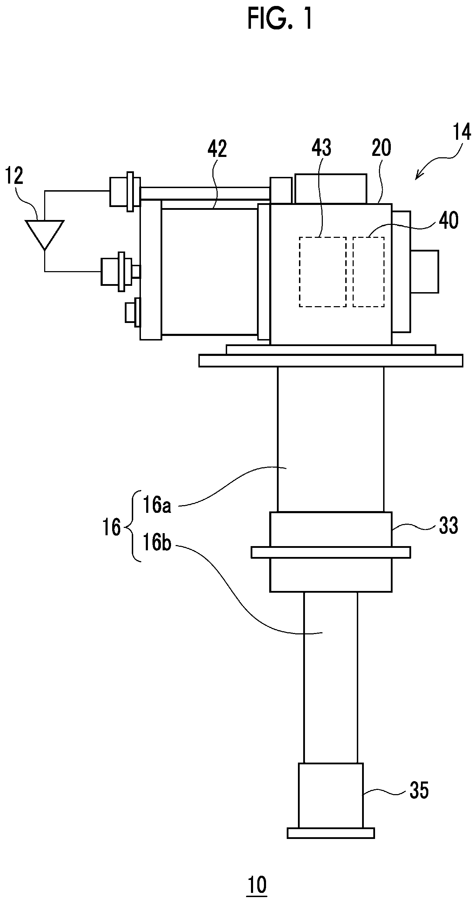

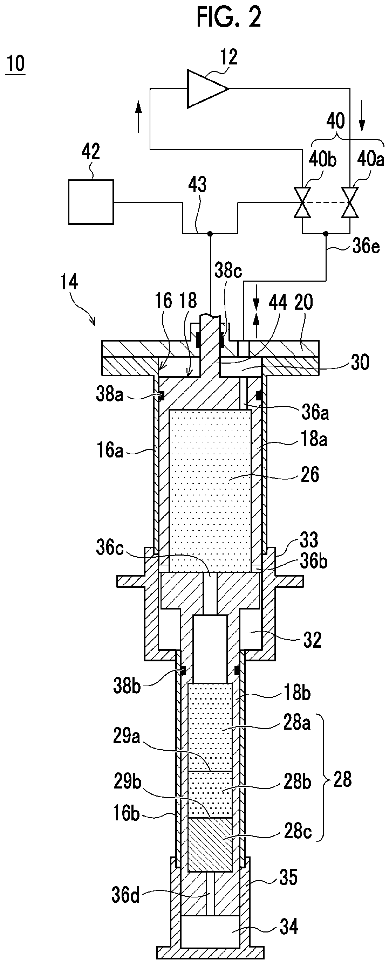

Figs. 1 and 2 are views schematically illustrating a cryocooler 10 according to an embodiment. The cryocooler 10 is, for example, a two-stage type Gifford-McMahon (GM) cryocooler. Fig. 1 illustrates the appearance of the cryocooler 10, and Fig. 2 illustrates the internal structure of the cryocooler 10.

The cryocooler 10 includes a compressor 12 and an expander 14. The compressor 12 is configured to collect a working gas of the cryocooler 10 from the expander 14, to pressurize the collected working gas, and to supply the working gas to the expander 14 again. The working gas is also called a refrigerant gas, and other suitable gases may be used although a helium gas is typically used.

The expander 14 includes a cryocooler cylinder 16, a displacer assembly 18, and a cryocooler housing 20. The cryocooler housing 20 is coupled to the cryocooler cylinder 16, thereby forming a hermetic container that accommodates the displacer assembly 18. The internal volume of the cryocooler housing 20 may be connected to the low pressure side of the compressor 12 and maintained at a low pressure.

The cryocooler cylinder 16 has a first cylinder 16a and a second cylinder 16b. The first cylinder 16a and the second cylinder 16b each are, for example, a member that has a cylindrical shape, and the second cylinder 16b has a diameter smaller than that of the first cylinder 16a. The first cylinder 16a and the second cylinder 16b are coaxially disposed, and a lower end of the first cylinder 16a is strongly connected to an upper end of the second cylinder 16b.

The displacer assembly 18 has a first displacer 18a and a second displacer 18b. The first displacer 18a and the second displacer 18b each are, for example, a member that has a cylindrical shape, and the second displacer 18b has a diameter smaller than that of the first displacer 18a. The first displacer 18a and the second displacer 18b are coaxially disposed.

The first displacer 18a is accommodated in the first cylinder 16a, and the second displacer 18b is accommodated in the second cylinder 16b. The first displacer 18a can reciprocate in the axial direction along the first cylinder 16a, and the second displacer 18b can reciprocate in the axial direction along the second cylinder 16b. The first displacer 18a and the second displacer 18b are connected to each other and move integrally.

In this specification, in order to describe the positional relationship between the components of the cryocooler 10, for convenience, the side close to the top dead center of the axial reciprocation of the displacer is "upper", and the side close to the bottom dead center is "lower". The top dead center is the position of the displacer at which the volume of an expansion space is maximum, and the bottom dead center is the position of the displacer at which the volume of the expansion space is minimum. Since a temperature gradient in which the temperature drops from an upper side to a lower side in an axial direction is generated during the operation of the cryocooler 10, the upper side can also be called a high temperature side and the lower side can also be called a low temperature side.

The first displacer 18a accommodates a first regenerator 26. The tubular main body of the first displacer 18a is a first regenerator container extending in the axial direction. The first regenerator 26 is formed by filling a main body of the first displacer 18a with, for example, a wire mesh made of, such as copper, or other appropriate first regenerator material. An upper lid portion and a lower lid portion of the first displacer 18a may be provided as members separate from the main body of the first displacer 18a, or the first regenerator material may be accommodated in the first displacer 18a by fixing the upper lid portion and the lower lid portion of the first displacer 18a to the main body through appropriate means such as fastening and welding.

Similarly, the second displacer 18b accommodates a second regenerator 28. The tubular main body of the second displacer 18b is a second regenerator container extending in the axial direction. An upper lid portion and a lower lid portion of the second displacer 18b may be provided as members separate from the main body of the second displacer 18b, or the second regenerator material may be accommodated in the second displacer 18b by fixing the lower lid portion and the upper lid portion of the second displacer 18b to the main body through appropriate means such as fastening and welding.

The second regenerator 28 includes at least two types of regenerator materials, in this example, three types of regenerator materials, and these regenerator materials are stacked in the axial direction of the second displacer 18b. As shown in Fig. 2, the second regenerator 28 includes a high-temperature side regenerator material 28a, an intermediate regenerator material 28b, and a low-temperature side regenerator material 28c in order from the high-temperature side to the low-temperature side in the axial direction. In order to increase the cooling capacity of the second stage of the cryocooler 10, materials having a large specific heat at different temperatures are selected as the regenerator materials.

The high-temperature side regenerator material 28a may be formed of a material having a relatively high specific heat by volume (for example, a specific heat by volume higher than that of copper) in a temperature on the high temperature side of the second displacer 18b, for example, a temperature range of 10K to 50K or at least a part thereof. As described above, the high-temperature side regenerator material 28a may have a higher specific heat by volume than copper, which is a regenerator material typically used in the first displacer 18a, in this temperature range. In addition, the high-temperature side regenerator material 28a may have a higher specific heat by volume than the magnetic regenerator material described later in this temperature range. The high-temperature side regenerator material 28a may be formed of a non-magnetic metal material.

As an example of such a high-temperature side regenerator material 28a, in this embodiment, a bismuth silver-based regenerator material, for example, a bismuth silver alloy is used. The bismuth silver-based regenerator material includes bismuth as a main component and a small amount of silver as an additive.

Here, the "main component" means the most abundant component (for example, the component having the maximum weight%) in the total amount of the regenerator material composition. For example, the bismuth silver-based regenerator material may contain at least 80% by weight, or at least 90% by weight, or at least 95% by weight of bismuth. In the bismuth silver-based regenerator material, all the balance excluding the additive (that is, silver) may be bismuth.

In this embodiment, the bismuth silver-based regenerator material contains at most 10% by weight of silver as an additive. This is because when the ratio of silver exceeds 10% by weight, it becomes difficult or impossible to manufacture the bismuth silver alloy. Since the bismuth silver alloy has a wide solid-liquid coexistence temperature range (262.5 to 350°C), solidification proceeds while forming dendrites (dendritic crystals) when cooling starts from the solution temperature in the alloy manufacturing process. At this time, as the dendrite grows, the solute bismuth is discharged into the liquid phase. As a result, the amount of bismuth is small in the dendrite solid, and the amount of bismuth increases in the remaining liquid phase. Therefore, it is difficult or impossible to stably manufacture a bismuth silver alloy having a silver content of more than 10% by weight.

As will be described later, for example, the bismuth silver-based regenerator material may contain at most 5% by weight, or at most 2% by weight, or at most 1% by weight of silver as an additive. The bismuth silver-based regenerator material may contain at least 0.001% by weight of silver as an additive. The bismuth silver-based regenerator material may contain only silver as an additive.

As the intermediate regenerator material 28b, a material different from the high-temperature side regenerator material 28a is used. The intermediate regenerator material 28b may be formed of a material having a relatively high specific heat by volume in a temperature of an axial intermediate portion of the second displacer 18b, for example, a temperature range of 5K to 10K or at least a part thereof. Typically, the intermediate regenerator material 28b may be formed of the magnetic regenerator material having a peak of the specific heat by volume associated with the magnetic phase transition in this temperature range. The intermediate regenerator material 28b may be formed of a metallic magnetic material such as HoCu₂ or Er₃Ni.

As the low-temperature side regenerator material 28c, a magnetic regenerator material different from the intermediate regenerator material 28b is used. The low-temperature side regenerator material 28c may be formed of a magnetic regenerator material having a relatively high specific heat by volume in a temperature on the low temperature side (that is, a low temperature end of the displacer in which the temperature is the lowest in the displacer assembly 18) of the second displacer 18b, for example, a temperature range of 1K to 5K or at least a part thereof.

The magnetic regenerator material suitable for the low-temperature side regenerator material 28c has a peak of the specific heat by volume associated with the magnetic phase transition in this temperature range. The magnetic regenerator material may be a non-metal magnetic material, and may contain at least one type of the magnetic regenerator material represented by the general formula RₓO₂S or (R_{1-y}R'_{y})ₓO₂S (where R and R' are at least one type of rare earth element, 0.1 ≤ x ≤ 9, 0 < y < 1), or GdₓAl₂₋ₓO₃ (1 ≤ x < 2). The rare earth elements R and R' may be, for example, Yttrium Y, Lantern La, Cerium Ce, Praseodymium Pr, Neodymium Nd, Promethium Pm, Samarium Sm, Europium Eu, Gadolinium Gd, Terbium Tb, Dysprosium Dy, Holmium Ho, Erbium Er, Thulium Tm, or Ytterbium Yb.

The magnetic regenerator material used for the low-temperature side regenerator material 28c may be Gd₂O₂S (also referred to as GOS), Tb₂O₂S (also referred to as TBOS), (Gd_{1-y}Tb_{y})₂O₂S (0 < y < 1, also referred to as GdTbOS), or GdAlO₃ (also referred to as GAP), or may contain at least one type of these.

As is known, such a non-metal magnetic regenerator material has a higher (for example, several times higher) specific heat by volume in a temperature range of, for example, 1K to 5K or at least a part thereof, as compared with a magnetic regenerator material of a metal such as HoCu₂. Therefore, the low-temperature side regenerator material 28c is suitable for increasing the cooling capacity of the cryocooler 10 that provides cryogenic cooling in this temperature range.

In addition, in order to improve the mechanical strength of the magnetic regenerator material, an additive may be added to the magnetic regenerator material. For example, the additive may be at least one type of zirconium Zr, aluminum Al, and alumina (Al₂O₃). For example, the weight ratio of the additive to the magnetic regenerator material may be 20% or less, or 15% or less. In this manner, the hardness of the magnetic regenerator material is increased without significantly changing the specific heat by volume of the magnetic regenerator material (that is, without significantly affecting the cooling capacity of the cryocooler 10), and the risk of damage and powdering due to impact can be reduced.

The high-temperature side regenerator material 28a, the intermediate regenerator material 28b, and the low-temperature side regenerator material 28c may be granular. The granules configuring such a granular regenerator material may be formed into granules having a size of, for example, 0.01 mm or more and 3 mm or less, and may be filled in the second displacer 18b. For example, the particle size of the granules may be 0.14 mm or more and 1.6 mm or less, preferably 0.15 mm or more and 1.4 mm or less, and more preferably 0.22 mm or more and 1.3 mm or less. The ratio of the granules having a particle size of 0.14 mm or more and 1.6 mm or less may be 70% by weight or more with respect to the total granules. When the particle size is less than 0.14 mm, the density at the time of filling the regenerator is extremely high, and the passage resistance of the working gas (for example, helium gas) can be rapidly increased. In addition, when the particle size exceeds 1.6 mm, there is a concern that the heat exchange efficiency between the granules and the working gas may be significantly lowered.

In addition, the ratio (aspect ratio) of the maximum diameter to the minimum diameter of the granules is 5 or less, preferably 3 or less, more preferably 2 or less, and as close to a spherical shape as possible in any three-dimensional direction. When the aspect ratio exceeds 5, the deformation and fracture are likely to occur mechanically, and filling at a high density is difficult, so that the cooling efficiency is lowered. Therefore, the ratio of the granules in which the ratio of the major axis to the minor axis is 5 or less may be 70% by weight or more with respect to the total granules.

In order to protect the granules, the surface may be coated with a coating having a thickness of, for example, 1 to 50 um (for example, alumina (Al₂O₃), a fluororesin, or the like).

In order to separate the high-temperature side regenerator material 28a and the intermediate regenerator material 28b, a partition member such as a wire net may be disposed at the boundary 29a between the high-temperature side regenerator material 28a and the intermediate regenerator material 28b. Further, if necessary, the partition member may be disposed at the boundary 29b between the intermediate regenerator material 28b and the low-temperature side regenerator material 28c.

With reference to Fig. 2, the displacer assembly 18 forms an upper chamber 30, a first expansion chamber 32, and a second expansion chamber 34 inside the cryocooler cylinder 16. In order to exchange heat with a desired object or medium to be cooled by the cryocooler 10, the expander 14 includes a first cooling stage 33 and a second cooling stage 35. The upper chamber 30 is formed between the upper lid portion of the first displacer 18a and an upper portion of the first cylinder 16a. The first expansion chamber 32 is formed between the lower lid portion of the first displacer 18a and the first cooling stage 33. The second expansion chamber 34 is formed between the lower lid portion of the second displacer 18b and the second cooling stage 35. The first cooling stage 33 is fixed to a lower portion of the first cylinder 16a to surround the first expansion chamber 32, and the second cooling stage 35 is fixed to a lower portion of the second cylinder 16b to surround the second expansion chamber 34.

The first regenerator 26 is connected to the upper chamber 30 through a working gas flow path 36a formed in the upper lid portion of the first displacer 18a, and is connected to the first expansion chamber 32 through a working gas flow path 36b formed in the lower lid portion of the first displacer 18a. The second regenerator 28 is connected to the first regenerator 26 through a working gas flow path 36c formed from the lower lid portion of the first displacer 18a to the upper lid portion of the second displacer 18b. In addition, the second regenerator 28 is connected to the second expansion chamber 34 through a working gas flow path 36d formed in the lower lid portion of the second displacer 18b.

The working gas flow between the first expansion chamber 32, the second expansion chamber 34, and the upper chamber 30 is not the clearance between the cryocooler cylinder 16 and the displacer assembly 18, but a first seal 38a and a second seal 38b may be provided to be guided to the first regenerator 26 and the second regenerator 28. The first seal 38a may be mounted on the upper lid portion of the first displacer 18a to be disposed between the first displacer 18a and the first cylinder 16a. The second seal 38b may be mounted on the upper lid portion of the second displacer 18b to be disposed between the second displacer 18b and the second cylinder 16b.

Further, the expander 14 includes a pressure switching valve 40 and a driving motor 42. The pressure switching valve 40 is accommodated in the cryocooler housing 20, and the driving motor 42 is attached to the cryocooler housing 20.

As illustrated in Fig. 2, the pressure switching valve 40 includes the high pressure valve 40a and the low pressure valve 40b, and is configured to generate periodic pressure fluctuation in the cryocooler cylinder 16. The working gas discharge port of the compressor 12 is connected to the upper chamber 30 via the high pressure valve 40a, and the working gas suction port of the compressor 12 is connected to the upper chamber 30 via the low pressure valve 40b. The high pressure valve 40a and the low pressure valve 40b are configured to selectively and alternately open and close (that is, when one is open, the other is closed). A high pressure (for example, 2 to 3 MPa) working gas is supplied from the compressor 12 to the expander 14 through the high pressure valve 40a, and a low pressure (for example, 0.5 to 1.5 MPa) working gas is collected from the expander 14 to the compressor 12 through the low pressure valve 40b. For the sake of understanding, the flow direction of the working gas is indicated by an arrow in Fig. 2.

The driving motor 42 is provided to drive the reciprocating motion of the displacer assembly 18. The driving motor 42 is connected to a displacer drive shaft 44 via a motion conversion mechanism 43 such as a Scotch yoke mechanism. The motion conversion mechanism 43 is accommodated in the cryocooler housing 20 similar to the pressure switching valve 40. The displacer drive shaft 44 extends from the motion conversion mechanism 43 into the upper chamber 30 through the cryocooler housing 20, and is fixed to the upper lid portion of the first displacer 18a. A third seal 38c is provided in order to prevent leakage of the working gas from the upper chamber 30 to the cryocooler housing 20 (which may be maintained at a low pressure as described above). The third seal 38c may be mounted to the cryocooler housing 20 to be disposed between the cryocooler housing 20 and the displacer drive shaft 44.

When the driving motor 42 is driven, the rotational output of the driving motor 42 is converted into axial reciprocation of the displacer drive shaft 44 by the motion conversion mechanism 43, and the displacer assembly 18 reciprocates in the cryocooler cylinder 16 in the axial direction. Further, the driving motor 42 is connected to these valves to selectively and alternately open and close the high pressure valve 40a and the low pressure valve 40b.

When the compressor 12 and the driving motor 42 are operated, the cryocooler 10 generates periodic volume fluctuations in the first expansion chamber 32 and the second expansion chamber 34 and pressure fluctuations of the working gas synchronized therewith, and accordingly, the refrigeration cycle is configured, and the first cooling stage 33 and the second cooling stage 35 are cooled to a desired cryogenic temperature. The first cooling stage 33 may be cooled to a first cooling temperature within a range of, for example, about 30K to about 80K. The second cooling stage 35 may be cooled to a second cooling temperature lower than the first cooling temperature, for example, about 1K to 20K. The second cooling temperature may be a liquid helium temperature of about 4.2K or a lower temperature.

According to the embodiment, as described above, a bismuth silver-based regenerator material, for example, a bismuth silver alloy is used. The table below shows the measurement results of the Vickers hardness of the granular regenerator material made of the bismuth silver alloy according to the embodiment. As a comparative example, the table also shows the measurement results of the Vickers hardness of the pure bismuth granular regenerator material in the related art. In addition, in this document, a pure bismuth may refer to a bismuth having a purity of 99.99% or higher, a purity of 99.995% or higher, or a purity of 99.997% or higher.

**[Table 1]**

| | Hardness (HV) | Standard deviation (HV) |
|---|---|---|
| Bi (existing product) | 19.9 | 1.5 |
| Bi-0.01%Ag | - | - |
| Bi-0.25%Ag | - | - |
| Bi-1.0%Ag | 21.9 | 1.9 |
| Bi-2.0%Ag | 28.9 | 3.4 |
| Bi-5.0%Ag | 40.9 | 3.3 |

It is understood from the table that the measured value (HV) of the Vickers hardness of the granular regenerator material of the bismuth silver alloy according to the embodiment is larger than that of the granular regenerator material of pure bismuth of the comparative example. That is, the granular regenerator material of the bismuth silver alloy is harder than the granular regenerator material of pure bismuth. Specifically, the Vickers hardness of the granular regenerator material of pure bismuth is measured to be 19.9 (HV), whereas the Vickers hardness of the Bi-1.0% Ag granular regenerator material with 11.0% by weight of silver added is measured to be 21.9 (HV), the Vickers hardness of the Bi-2.0% Ag granular regenerator material with 2.0% by weight of silver added is measured to be 28.9 (HV), and the Vickers hardness of the Bi-5.0% Ag granular regenerator material with 5.0% by weight of silver added is measured to be 40.9 (HV). The table also includes standard deviations for each hardness measurement result.

In this way, the hardness (Vickers hardness, HV) is improved by adding a small amount of silver to the pure bismuth. That is, the toughness (difficulty of breaking) of the granular regenerator material of the bismuth silver alloy according to the embodiment is improved as compared with the granular regenerator material of pure bismuth of the comparative example.

Therefore, according to the embodiment, the risk that the granular regenerator material is crushed (pulverized) is reduced when the regenerator is filled with the granular regenerator material during the manufacturing process of the cryocooler 10. Similarly, during the operation of the cryocooler 10, the risk that the granular regenerator material is crushed is reduced due to a force received from a working gas (for example, helium gas) flowing in the regenerator.

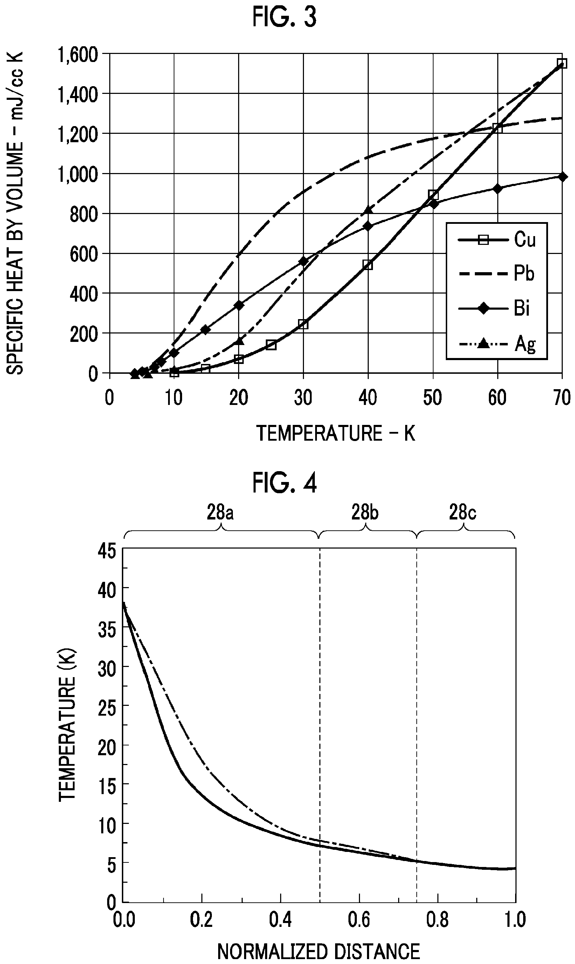

Fig. 3 is a graph showing specific heat by volume of some metallic materials in relation to the embodiment. Fig. 3 shows temperature changes in the specific heat by volume of lead (Pb), bismuth (Bi), silver (Ag), and copper (Cu) in a temperature range of 70K or lower.

Since lead has a high specific heat at a cryogenic temperature of about 60K or less, it has been widely used as a regenerator material in the past. However, in consideration of adverse effects on the environment and the human body, the use of lead is currently regulated or prohibited. Bismuth has a relatively high specific heat at an cryogenic temperature (for example, in a temperature range of about 10K to about 30K), although not as high as lead, so bismuth has recently been used as a regenerator material instead of lead. As illustrated, it can be seen that silver has a higher specific heat than bismuth at a temperature exceeding about 32K, and has a lower specific heat than bismuth at a temperature lower than that. As is known, copper has a high specific heat at a temperature exceeding about 60K, but the specific heat becomes considerably smaller at a temperature lower than that.

Since the bismuth silver-based regenerator material according to the embodiment is obtained by adding a small amount (for example, at most 10% by weight) of silver to pure bismuth, it is considered that the specific heat thereof is substantially equal to that of pure bismuth. However, it is considered that the specific heat of the bismuth-silver alloy is slightly lower than that of pure bismuth at a temperature lower than about 32K and slightly higher than that of pure bismuth at a temperature higher than about 32K.

Fig. 4 is a schematic view showing an axial temperature profile of the second regenerator 28 of the cryocooler 10, according to the embodiment. In Fig. 4, the vertical axis represents the temperature (K), and the horizontal axis represents a normalized distance. The normalized distance represents a position of the second regenerator 28 in the axial direction, where the high temperature end (that is, the upper end in Fig. 2) of the second regenerator 28 is 0 and the low temperature end (lower end in Fig. 2) of the second regenerator 28 is 1. For example, the normalized distance 0.5 represents a midpoint (a position of exactly 1/2) between the high temperature end and the low temperature end of the second regenerator 28 in the axial direction.

In Fig. 4, the axial temperature profile of the second regenerator 28 according to the embodiment is shown by a dash-dotted line, and the axial temperature profile of the second regenerator 28 according to the comparative example is shown by a solid line. In the second regenerator 28 according to the embodiment, the high-temperature side regenerator material 28a, that is, the bismuth silver alloy according to the embodiment is filled in a range of 0 to 0.5 in the normalized distance. On the other hand, in the second regenerator 28 according to the comparative example, the pure bismuth as the high-temperature side regenerator material 28a is filled in a range of 0 to 0.5 in the normalized distance. Common to both, the intermediate regenerator material 28b is filled in a range of 0.5 to 0.75 in the normalized distance, and the low-temperature side regenerator material 28c is filled in a range of 0.75 to 1 in the normalized distance.

In the example illustrated in Fig. 4, the temperature at the high temperature end (position of 0 in the normalized distance) of the second regenerator 28 is about 38K. The temperature in the middle of the second regenerator 28 (position of 0.5 in the normalized distance) is about 7 to 8K, although it is slightly different between the embodiment and the comparative example. As described above, the specific heat of the bismuth-silver alloy according to the embodiment is lower than that of pure bismuth in most of this temperature range (accurately, in a temperature range of about 32 K or lower).

Therefore, as illustrated, the temperature of the high-temperature side regenerator material 28a according to the embodiment is slightly higher than that of the comparative example. More precisely, the axial temperature profile (dash-dotted line) of the second regenerator 28 according to the embodiment transitions upward from the axial temperature profile (solid line) of the second regenerator 28 according to the comparative example, in an axial range corresponding to the high-temperature side regenerator material 28a (a range of 0 to 0.5 in the normalized distance). The temperature profiles of the intermediate regenerator material 28b and the low-temperature side regenerator material 28c are substantially the same in both cases.

The density of the working gas (typically, helium gas) of the cryocooler 10 increases as the temperature decreases from a room temperature to a cryogenic temperature. Since the temperature of the second regenerator 28 is lower than that of the first regenerator 26 during the operation of the cryocooler 10, the density of the gas in the second regenerator 28 is larger than the density of the gas in the first regenerator 26. Therefore, as the temperature of the second regenerator 28 is lower, a larger amount of the working gas supplied from the compressor 12 to the expander 14 is absorbed (trapped) from the first regenerator 26 into the second regenerator 28. When an excessively large amount of gas is unevenly distributed to the second regenerator 28, the cooling capacity of the first stage of the cryocooler 10 may be lowered.

As described above, by using the bismuth silver-based regenerator material for the high-temperature side regenerator material 28a according to the embodiment, the temperature profile of the second regenerator 28 can be raised as compared with the pure bismuth of the comparative example. In this manner, the amount of gas trapped in the second regenerator 28 can be reduced, and accordingly, the amount of gas used for cooling in the first regenerator 26 can be increased. According to the embodiment, there is a possibility that the cooling capacity of the first stage of the cryocooler 10 can be improved as compared with the comparative example.

However, when the silver content is extremely high, the amount of a decrease in the specific heat of the bismuth silver-based regenerator material with respect to the pure bismuth becomes large, and thus there is a possibility that the cooling capacity of the cryocooler 10 decreases.

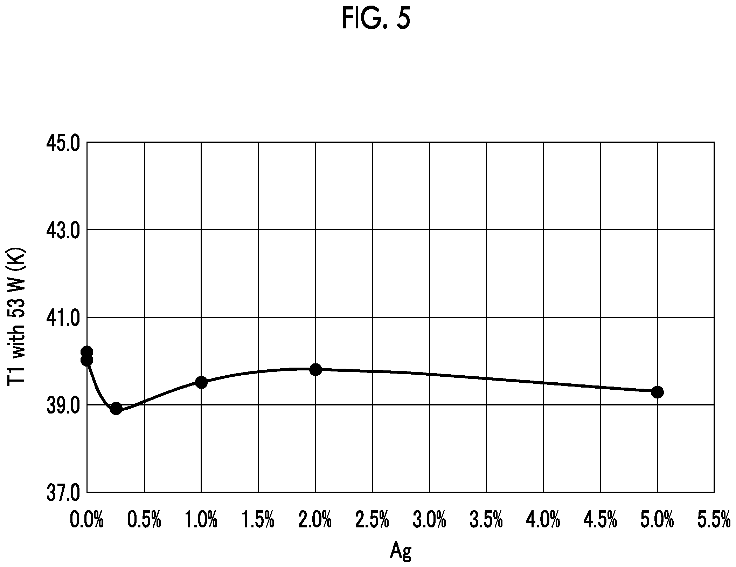

Fig. 5 is a graph showing a relationship between a silver content in a bismuth silver-based regenerator material and a cooling temperature of the first-stage of the cryocooler 10, according to the embodiment. In Fig. 5, the measured temperatures T1 of the first cooling stage 33 when the silver content in the bismuth silver alloy used as the high-temperature side regenerator material 28a of the second regenerator 28 is 0% (that is, pure bismuth), 0.01% by weight, 0.25% by weight, 1.0% by weight, 2.0% by weight, and 5.0% by weight are plotted.

The cryocooler 10 used for the measurement is a 4K GM cryocooler (model number RDE-412) and a compressor (model number F-50) manufactured by Sumitomo Heavy Industries, Ltd. The filling pressure of the working gas is 1.6 MPa. The cryocooler 10 is driven at a power source frequency of a commercial power supply, and is in a no-load operation. The pressure during operation is 2.2 MPa on the high pressure side and 0.5 MPa on the low pressure side. The bismuth silver-based regenerator material is formed into granules having a particle size within the above-described numerical range.

As shown in Fig. 5, in a comparative example, that is, when pure bismuth is used as the high-temperature side regenerator material 28a, the measured temperature T1 of the first cooling stage 33 is about 40.2K.

On the other hand, in the bismuth silver-based regenerator material according to the embodiment, it can be seen that the measured temperature T1 is lower than that of the comparative example regardless of the silver content. Specifically, the measured temperature T1 is about 40.0K (@0.01% by weight Ag), about 38.9K (@0.25% by weight Ag), about 39.4K (@1.0% by weight Ag), about 39.8K (@2.0% by weight Ag), and about 39.2K (@5.0% by weight Ag).

As described above, in the bismuth silver-based regenerator material according to the embodiment, the silver content is set to 5% by weight at most, so that compared to the pure bismuth regenerator material of the comparative example, the cooling capacity of the first stage of the cryocooler 10 can be maintained at the same level or improved. That is, the decrease in the specific heat due to the addition of silver to the bismuth does not adversely affect the cooling capacity of the cryocooler 10.

From the viewpoint of increasing the cooling capacity of the first stage and lowering the temperature of the first stage, in the bismuth silver-based regenerator material according to the embodiment, the silver content may be at most 2% by weight, or at most 1% by weight. In addition, the silver content may be at least 0.01% by weight, or at least 0.1% by weight, or at least 0.25% by weight.

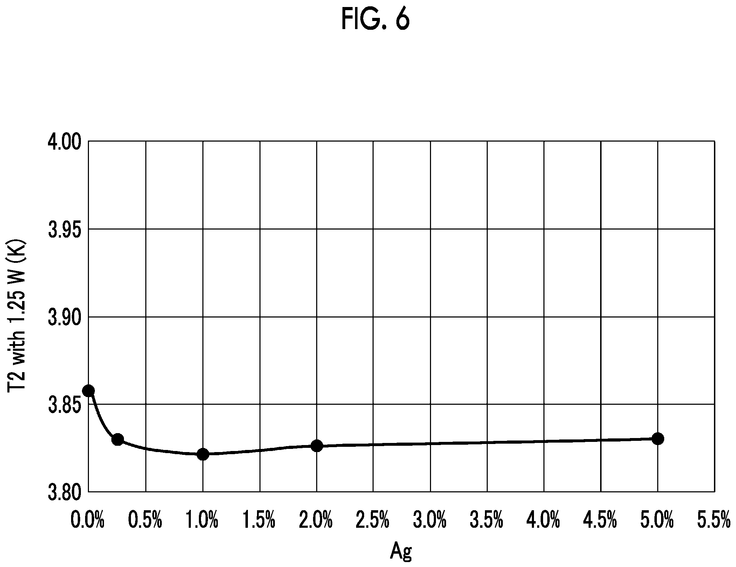

Fig. 6 is a graph showing a relationship between a silver content in a bismuth silver-based regenerator material and a cooling temperature of the second-stage of the cryocooler 10, according to an embodiment. In Fig. 6, the measured temperatures T2 of the second cooling stage 35 when the silver content in the bismuth silver alloy used as the high-temperature side regenerator material 28a of the second regenerator 28 is 0% (that is, pure bismuth), 0.25% by weight, 1.0% by weight, 2.0% by weight, and 5.0% by weight are plotted. The operating conditions of the cryocooler 10 are the same as those in Fig. 5.

As shown in Fig. 6, in a comparative example, that is, when pure bismuth is used as the high-temperature side regenerator material 28a, the measured temperature T2 of the second cooling stage 35 is about 3.86K. On the other hand, in the bismuth silver-based regenerator material according to the embodiment, it can be seen that the measured temperature T2 is lower than that of the comparative example regardless of the silver content. Specifically, the measured temperature T2 is about 3.83K (@0.25% by weight Ag), about 3.82 (@1.0% by weight Ag), about 3.83K (@2.0% by weight Ag), or about 3.83K (@5.0% by weight Ag).

As described above, in the bismuth silver-based regenerator material according to the embodiment, the silver content is set to 5% by weight at most, so that compared to the pure bismuth regenerator material of the comparative example, the cooling capacity of the second stage of the cryocooler 10 can be maintained at the same level or improved. From the viewpoint of increasing the cooling capacity of the second stage and lowering the temperature of the second stage, in the bismuth silver-based regenerator material according to the embodiment, the silver content may be at most 2% by weight, or at most 1% by weight. In addition, the silver content may be at least 0.01% by weight, or at least 0.1% by weight, or at least 0.25% by weight.

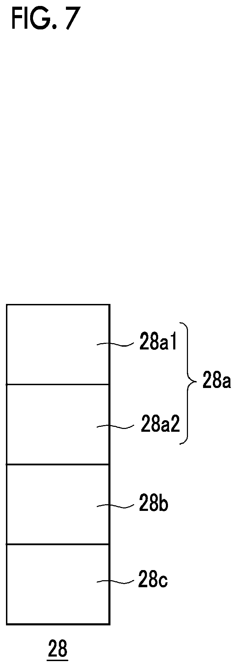

Fig. 7 is a schematic view showing the second regenerator 28 of the cryocooler according to a modification example. The second regenerator 28 includes the high-temperature side regenerator material 28a, the intermediate regenerator material 28b, and the low-temperature side regenerator material 28c, as in the above-described embodiment. However, the high-temperature side regenerator material 28a is divided into a first region 28a1 on the high temperature side and a second region 28a2 on the low temperature side. The first region 28a1 may be filled with a zinc-based regenerator material, and the second region 28a2 may be filled with a bismuth silver-based regenerator material. The zinc-based regenerator material may be zinc or an alloy containing zinc as a main component. The zinc-based regenerator material may be formed into granules in the same manner as the bismuth silver-based regenerator material. The zinc-based regenerator material is disposed on the side opposite to the magnetic regenerator material (intermediate regenerator material 28b and low-temperature side regenerator material 28c) with respect to the bismuth silver-based regenerator material in the axial direction of the second regenerator 28. In order to partition the first region 28a1 and the second region 28a2, a partition member such as a wire net may be disposed at the boundary between the first region 28a1 and the second region 28a2.

The disposition area of the bismuth silver-based regenerator material may be selected from in a range of 0 to 0.6 in the normalized distance in the axial direction. When another regenerator material such as a zinc-based regenerator material is filled on the high-temperature side with respect to the bismuth silver-based regenerator material, the disposition area of the bismuth silver-based regenerator material may be selected from the range of 0.2 to 0.6. For example, the disposition area of the bismuth silver-based regenerator material may be in the range of 0.25 to 0.5.

Even when the second regenerator 28 shown in Fig. 7 is adopted, the same effects as those of the above-described embodiment can be obtained.

The present invention has been described above based on the examples. It will be understood by those skilled in the art that the present invention is not limited to the embodiment, various design changes are possible, various modification examples are possible, and such modification examples are also within the scope of the present invention. Various features described in relation to the certain embodiment are also applicable to other embodiments. A new embodiment resulting from combination has the effects of each of the combined embodiments.

For example, the shape of the granular regenerator material is not limited to a spherical shape. The granular regenerator material may have a block shape, a pellet shape, or other shapes.

In addition, the bismuth silver-based regenerator material according to the embodiment may have a shape other than the granular shape. For example, the bismuth silver-based regenerator material may be processed into a wire mesh or may be formed into a plate shape. The bismuth silver-based regenerator material may be coated on the surface of a wire mesh or a plate-shaped member formed of a base material (for example, an appropriate metal material such as copper), for example, by plating.

In addition to silver, a second additive different from silver may be added to the bismuth silver-based regenerator material. The second additive may be, for example, at least one of tin (Sn), zinc (Zn), aluminum (Al), and silicon (Si), or any mixture thereof.

In certain embodiments, the regenerator material containing bismuth as a main component may include copper as an additive together with silver or in place of silver.

In the above-described embodiment, a GM cryocooler has been described as an example, but the present invention is not limited thereto. In an embodiment, the cryocooler 10 may be another type of cryocooler such as a Solvay cryocooler, a Stirling cryocooler, or a pulse tube cryocooler, for example. The foam of the magnetic regenerator material according to the embodiment may be used as a regenerator in an arbitrary cooling stage (for example, a cooling stage having the lowest temperature) in a multi-stage cryocooler.

Although the present invention has been described using specific words and phrases based on the embodiment, the embodiment merely shows one aspect of the principle and application of the present invention, and various modifications and improvements can be made within the scope of the present invention described in claims.

### Brief Description of the Reference Symbols

- 10: Cryocooler
- 14: Expander
- 26: First regenerator
- 28: Second regenerator
- 28a: High-temperature side regenerator material
- 28b: Intermediate regenerator material
- 28c: Low-temperature side regenerator material

## Claims

1. A regenerator material for a cryocooler (10) comprising:
bismuth as a main component; and
at most 10% by weight of silver as an additive.

2. The regenerator material for a cryocooler (10) according to claim 1, wherein
at most 5% by weight of silver is provided as the additive.

3. The regenerator material for a cryocooler (10) according to claim 1, wherein
at most 2% by weight of silver is provided as the additive.

4. The regenerator material for a cryocooler (10) according to claim 1, wherein
at most 1% by weight of silver is provided as the additive.

5. The regenerator material for a cryocooler (10) according to claim 1, wherein
only silver is provided as the additive.

6. The regenerator material for a cryocooler (10) according to any one of claims 1 to 5, wherein
the regenerator material is granular.

7. A regenerator (28) for a cryocooler (10) comprising:
a bismuth silver-based regenerator material containing bismuth as a main component and at most 10% by weight of silver as an additive; and
a magnetic regenerator material disposed at a location different from a location of the bismuth silver-based regenerator material in an axial direction of the regenerator.

8. The regenerator (28) for a cryocooler (10) according to claim 7, further comprising:
a zinc-based regenerator material disposed on a side opposite to the magnetic regenerator material with respect to the bismuth silver-based regenerator material in the axial direction of the regenerator.

9. A cryocooler (10) comprising:
the regenerator (28) for a cryocooler (10) according to claim 7 or 8.
